# EUROPÄISCHE PATENTSCHRIFT

(11) **EP 3 440 928 B1**
(45) Veröffentlichungstag und Bekanntmachung des Hinweises auf die Patenterteilung: **09.09.2020**
(21) Anmeldenummer: 18185510.7
(22) Anmeldetag: 25.07.2018
(51) Int. Cl.: A01K 1/02, A01K 1/035

(54) **TIERDECKE UND TIERTRANSPORTSYSTEM**
ANIMAL BLANKET AND ANIMAL TRANSPORT SYSTEM
COUVERTURE POUR ANIMAUX ET SYSTÈME DE TRANSPORT D'ANIMAUX

(30) Priorität: 07.08.2017 DE 102017007451
(43) Veröffentlichungstag der Anmeldung: 13.02.2019
(73) Patentinhaber: DOGSTYLER Soest GmbH, 59494 Soest (DE)
(72) Erfinder:
(74) Vertreter: Vossius & Partner Patentanwälte Rechtsanwälte mbB

(56) Entgegenhaltungen:
- US-A- 2 032 248
- US-A- 2 854 948
- US-A- 3 842 454
- US-A- 6 044 794
- US-A1- 2004 131 801
- US-A1- 2015 007 776

## Beschreibung

Die vorliegende Erfindung betrifft eine Tierdecke zur Anordnung in oder an einer Tiertransportvorrichtung. Weiterhin betrifft die Erfindung ein Tiertransportsystem.

Tierdecken und Tiertransportsysteme müssen einer Vielzahl von Anordnungen gerecht werden, insbesondere wenn sie für Haustiere in einem Innenraum eines Kraftfahrzeugs genutzt werden sollen. Eine Tierdecke und ein Tiertransportsystem sollten leicht zu reinigen sein, da diese stark einer Verschmutzung durch jeweilige zu transportierende Tiere ausgesetzt sind. Außerdem sollten die Tierdecke und das Tiertransportsystem auch jeweilige Flächen des Kraftfahrzeugs, auf welchen sie abgestellt bzw. abgelegt sind, zuverlässig vor Verschmutzungen und Beschädigungen schützen. Beispielsweise sollte die Tierdecke und das Tiertransportsystem die Verschmutzung und/oder Beschädigung eines Autositzes verhindern, wenn ein Hund nach einem Waldspaziergang ohne weitere Reinigung in einem Innenraum eines Kraftfahrzeugs transportiert werden soll.

Zudem sollten Tierdecken und Tiertransportsysteme leicht zu handhaben sein, da sie üblicherweise häufig aus einem Innenraum eines Kraftfahrzeugs entnommen werden und wieder in diesen eingelegt werden. Zusätzlich sollten eine Tierdecke und ein Tiertransportsystem auch komfortabel für das darin oder darauf befindliche Tier sein, damit dieses deren Benutzung auch akzeptiert. Dies ist insbesondere bei dem Transport in einem Innenraum eines Kraftfahrzeugs wichtig, da andernfalls das Tier unruhig sein könnte und dadurch den Fahrer des Kraftfahrzeugs ablenken kann, wodurch es potenziell zu gefährlichen Situationen kommen kann.

Aus der US 6,170,100 B1 ist ein selbstöffnendes Handtuch bekannt, welches einen Rahmen und eine Membran mit einer Unterseite und einer Oberseite sowie einen Verschluss umfasst. Der Rahmen stützt sich dabei innenseitig an einem Rand ab, welcher die Oberseite und die Unterseite der Membran miteinander verbindet. In einem Teilbereich ist dieser Rand durch den Verschluss ersetzt. Hier stützt sich das Rahmenelement dann an dem Verschluss ab. Der seitliche Verschluss kann dabei jedoch eine Schwachstelle beim Abstützen des Spannelements im Inneren des Handtuchs sein. Weiterhin kann dieser Verschluss unbequem bei einem Liegen auf dem Handtuch sein.

In der US 2,854,948 ist ein Schlafsack für Haustiere beschrieben.

In der US 2004/0131801 A1 ist eine zusammenfaltbare Struktur beschrieben, welche als Haustierunterschlupf fungieren kann.

In der US 2015/0007776 A1 ist ein zusammenlegbares Haustierbett beschrieben.

In der US 2,032,248 A ist ein Haustierbett beschrieben, das eine Matratze und ein ringförmiges Kissen aufweist.

US3842454A und US6044794A sind ebenfalls aus dem Stand der Technik bekannt.

Aufgabe der vorliegenden Erfindung ist es, eine Tierdecke zu schaffen, welche besonders komfortabel zu benutzen ist. Weiterhin ist es Aufgabe der vorliegenden Erfindung, ein Tiertransportsystem zu schaffen, welches besonders komfortabel zu nutzen ist.

Diese Aufgaben werden erfindungsgemäß durch die Gegenstände des unabhängigen Anspruchs 1 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Tierdecke als vorteilhafte Ausgestaltung des Tiertransportsystems und umgekehrt anzusehen sind.

Ein erster Aspekt der Erfindung betrifft eine Tierdecke zur Anordnung in oder an einer Tiertransportvorrichtung mit einer eine Oberseite und eine Unterseite umfassenden und im Wesentlichen flachen Hülle, wobei die Oberseite eine Sitzfläche für ein Tier bildet und die Unterseite der Hülle von der Sitzfläche abgewandt ist. Weiterhin umfasst die Tierdecke ein Spannelement, welches innerhalb der Hülle in einem Freiraum zwischen der Oberseite und der Unterseite angeordnet ist und dazu ausgebildet ist, die Hülle im Wesentlichen flach aufzuspannen, wobei die Unterseite eine Zugangsöffnung zu dem Freiraum aufweist. Zum Aufspannen der Hülle kann das Spannelement sich insbesondere an einer Kante und/oder einem Rand innenseitig an der Hülle abstützen. Dieser Rand und/oder diese Kante kann wenigstens bereichsweise umlaufend um die Oberseite und die Unterseite der Hülle sein. Insbesondere kann die Kante und/oder der Rand durch eine Verbindung zwischen der Oberseite und der Unterseite gebildet sein.

Das Spannelement übt vorzugsweise eine Vorspannkraft auf die Hülle aus. Die Hülle kann insbesondere biegeschlaff ausgebildet sein, vorzugsweise als textiles Element. Der Freiraum kann dabei im Wesentlichen vollständig durch das Spannelement ausgefüllt sein. Das Spannelement kann den Freiraum durch Einlegen in die Hülle bilden. Ansonsten können die Oberseite und die Unterseite der Hülle aneinander anliegen. Bei Entfernen des Spannelements aus dem Freiraum können die Oberseite und die Unterseite der Hülle auch in dem Bereich des Freiraums aneinander anliegen.

Durch das Spannelement wird die Hülle im Wesentlichen flach aufgespannt, so dass es für einen Benutzer nicht notwendig ist, die Tierdecke flach auszubreiten. In diesem Sinne kann die Tierdecke auch als selbstentfaltend angesehen werden. Durch das im Wesentlichen flache Aufspannen der Tierdecke bzw. der Hülle werden Falten, Knicke und dergleichen in der Sitzfläche für das Tier vermieden. Damit ist die Tierdecke für das Tier auch besonders komfortabel. Gleichzeitig kann so verhindert werden, dass sich die Tierdecke zusammenrollt, knickt, faltet und/oder verschiebt, wenn sich ein darauf befindliches Tier bewegt. Dadurch kann fortwährend eine komfortable Sitzfläche für das Tier zur Verfügung gestellt werden und zudem verhindert werden, dass ein Mensch die Tierdecke nach einer Bewegung des Tieres neu ausrichten muss. Dadurch ist die Tierdecke besonders komfortabel zu benutzen.

Durch die Zugangsöffnung an der Unterseite ist es besonders leicht möglich, das Spannelement aus der Hülle zu entnehmen. Dadurch kann die Hülle besonders einfach gewaschen werden, da so beispielsweise selbst wenn das Spannelement für eine Maschinenwäsche ungeeignet ist, die Hülle waschmaschinenfest sein kann und separat gewaschen werden kann. Zudem kann die Hülle so besonders platzsparend verstaut werden. Durch die unterseitige Positionierung der Zugangsöffnung ist diese für das Tier unzugänglich, so dass es nur zu einer geringeren oder gar keinen Verschmutzungen des Freiraums in der Hülle kommen kann. Zudem können so auch jeweilige Ränder der Zugangsöffnung von der Oberseite der Hülle während der Benutzung der Tierdecke abgedeckt sein, so dass die Sitzfläche auch hierdurch frei von Erhebungen oder dergleichen sein kann. Dadurch kann eine ebene und komfortable Sitzfläche für das Tier zur Verfügung gestellt werden.

Im Gegensatz zu einer seitlichen Zugangsöffnung, beispielsweise an einem Rand, erfordert die Zugangsöffnung zudem auch keinen Verschluss. Das Spannelement muss sich durch die unterseitige Lage der Zugangsöffnung nicht an diesem abstützen. Entsprechend wird ein gegebenenfalls vorgesehener Verschluss auch nicht oder nur besonders geringfügig durch das Spannelement belastet. Ein seitlicher Verschluss zwischen der Oberseite und der Unterseite der Hülle, wie beispielsweise ein Reisverschluss, kann zudem zu einer für das Tier unangenehmen Erhebung auf der Sitzfläche führen und/oder die Größe der Sitzfläche einschränken. Richtung Unterseite kann ein solcher Verschluss auch beispielsweise eine Auflagefläche des Kraftfahrzeugs, wie einen Fahrzeugsitz, durch harte Teile beschädigen. Vorliegend kann auf einen starken und/oder festen Verschluss verzichtet werden und die Zugangsöffnung, falls gewünscht, beispielsweise einfach mit einem textilen Abdeckelement mit Klettverschluss, Knöpfen oder anderer Verbindung zu der Hülle bedeckt werden.

Die Form der Zugangsöffnung kann dabei zu einer Form des Spannelements korrespondieren. Beispielsweise kann die Zugangsöffnung rund sein, wenn das Spannelement ebenfalls rund ist.

Das Spannelement kann in einem entspannten Zustand, in welchem es sich nicht an der Hülle abstützt, einen Durchmesser haben, welcher leicht größer ist als ein Abstand zwischen zwei gegenüberliegenden Seiten der Hülle, an welchen sich das Spannelement abstützt. Entsprechend kann das Spannelement im im Freiraum angeordneten Zustand einen vorgespannten bzw. verformten Zustand haben, welcher eine Vorspannkraft auf die Hülle erzeugt.

Die Unterseite der Hülle kann einem Boden, einem Fahrzeugsitz und/oder einer Tiertransportvorrichtung zugewandt sein, insbesondere einer Bodenfläche der Tiertransportvorrichtung. Die Größe der Hülle kann beispielsweise zu einer Größe einer Sitzfläche des Fahrzeugsitzes korrespondieren. Beispielsweise kann die Hülle und/oder die Tierdecke eine Größe aufweisen, bei welcher ein Abstand zweier gegenüberliegender Außenseiten der Hülle in Haupterstreckungsrichtung 20 cm bis 200 cm beträgt, bevorzugt 40 cm bis 80 cm. Ein Durchmesser der Hülle und/oder der Tierdecke kann in Haupterstreckungsrichtung ebenfalls 10 cm bis 350 cm betragen, bevorzugt 25 cm bis 95 cm. Die Tierdecke kann beispielsweise eine Höhe rechtwinklig zur Haupterstreckungsrichtung von 0,5 cm bis 10 cm aufweisen, insbesondere 2 cm bis 3 cm. Die Höhe kann durch eine flexible Polsterung bei Belastung bzw. Benutzung variieren. Die genannten Größen beziehen sich bevorzug auf die Tierdecke im aufgespannten Zustand. Die Größe des Spannelements kann hier korrespondieren.

Die Unterseite der Hülle kann als teilweise offen ausgebildet sein. Vorzugsweise ist die Zugangsöffnung von einem seitlichen Rand der Unterseite und/oder der Oberseite, insbesondere einem Rand der Tierdecke insgesamt, beabstandet. Die Zugangsöffnung kann mittig in der Unterseite angeordnet sein. Vorzugsweise beträgt ein Durchmesser bzw. eine maximale Ausdehnung der Zugangsöffnung mindestens 50% eines Abstands zweier gegenüberliegender Außenseiten der Hülle und/oder 50% eines Durchmessers der Hülle, bevorzugt sogar 70% oder mehr der genannten Werte, so dass sich das Spannelement im deformierten Zustand durch die Zugangsöffnung in die Hülle einbringen lassen kann, im ausgedehnten Zustand aber sicher in der Hülle positioniert ist.

Durch die Zugangsöffnung kann die Tierdecke besonders leicht sein, obwohl weiterhin an der Oberseite eine durchgehende Sitzfläche zur Verfügung gestellt wird. Dadurch ist die Tierdecke besonders leicht zu tragen und damit aus dem Kraftfahrzeug entnehmbar und in dieses wieder einlegbar. Darüber hinaus kann so eine Befestigung für die Tierdecke und/oder die Tiertransportvorrichtung besonders klein dimensioniert sein, da nur ein besonders geringes Gewicht gehalten werden muss. Entsprechend kann auch die Sicherheit erhöht sein.

Vorzugsweise ist das Spannelement aus einem flexiblen, bevorzugt elastischen Material gebildet. Beispielsweise kann das Spannelement biegsam und/oder elastisch sein. Als Material kommt beispielsweise ein Stahlwerkstoff und/oder ein Kunststoff infrage, insbesondere ein Federstahl. Mittels eines Federstahls kann eine besonders hohe Vorspannkraft erzeugt werden, während das Spannelement besonders klein und leicht sein kann. Ein Kunststoffmaterial, insbesondere ein flexibles Kunststoffmaterial, kann besonders kostengünstig sein und/oder leicht zu reinigen.

Erfindungsgemäß ist das Spannelement als, bevorzugt kreisförmiger, Ring ausgebildet, insbesondere als elastischer kreisförmiger Ring. Dieser kann auch als Spannring bezeichnet werden. Ein Ring kann die Hülle besonders gleichmäßig aufspannen und ist zudem besonders kostengünstig zu fertigen. Vorteilhafterweise korrespondiert die Form der Zugangsöffnung dabei mit einem runden Querschnitt zu der kreisförmigen Ringform des Spannelements. Der Ring kann dabei eine Materialstärke von 1 bis 20 mm aufweisen, bevorzugt 3 bis 7 mm, besonders bevorzugt ca. 5 mm. Das heißt, ein Querschnitt durch einen Teilbereich des Rings hat einen Durchmesser von 1 mm bis 5 mm, bevorzugt 2 bis 4 mm. Durch eine solche Materialstärke des Ringes kann die Tierdecke zuverlässig aufgespannt werden, während der Ring zu keiner merklichen Wölbung auf der Oberseite der Tierdecke führt und damit an dieser Stelle die Sitzfläche für das Tier unkomfortabel ist.

Vorzugsweise ist das Spannelement aus der Hülle durch die Zugangsöffnung entnehmbar. Hierzu können insbesondere die Größe der Zugangsöffnung und die Größe des Spannelements aufeinander abgestimmt werden. Ebenso kann hierfür die Flexibilität des Spannelements entsprechend gewählt werden. Vorzugsweise ist die Zugangsöffnung dazu ausgelegt, dass das Spannelement durch die Zugangsöffnung aus dem Inneren bzw. dem Freiraum der Hülle entnehmbar ist. Dabei sollte das Spannelement ohne Beschädigungen entnehmbar sein, um dieses nicht ersetzen zu müssen. Ebenso sollte die Hülle bei der Entnahme nicht beschädigt werden.

Durch die Entnehmbarkeit kann die Tierdecke besonders bauraumsparend verstaut werden und die Hülle besonders einfach gereinigt werden. Vorzugsweise ist eine Kraft zum Entnehmen des Spannelements notwendig, welche zu der Vorspannkraft korrespondiert. Entsprechend ist das Spannelement vorzugsweise so in der Hülle angeordnet, dass es nicht von selbst aus der Zugangsöffnung rutschen kann.

Vorzugsweise ist ein die Zugangsöffnung begrenzender Rand der Hülle durch eine umlaufende Verstärkung eingefasst. Diese Verstärkung kann beispielsweise als Bordüre und/oder Paspel ausgebildet sein. Dieser Rand kann ein umlaufender und die Zugangsöffnung begrenzender Rand sein. Die Verstärkung kann dabei eine Beschädigung der Hülle durch häufiges Entnehmen und Wiedereinführen des Spannelements besonders gut verhindern. Damit ist die Tierdecke besonders robust.

Vorzugsweise umfasst die Tierdecke eine Polsterung, insbesondere eine Polsterung an der Oberseite. Mittels der Polsterung kann eine besonders komfortable Sitzfläche für das Tier zur Verfügung gestellt werden, wodurch die Akzeptanz der Tierdecke besonders hoch sein kann. Insbesondere kann durch die Polsterung verhindert werden, dass das Tier weitere Teile, insbesondere harte Teile, welche unterhalb der Oberseite der Tierdecke angeordnet sind, spürt. Beispielsweise kann durch die Polsterung verhindert werden, dass das Tier das Spannelement und/oder die Verstärkung des Randes der Zugangsöffnung auf der Sitzfläche spürt. Auch dadurch ist die Tierdecke besonders komfortabel für das Tier.

Für die Polsterung kann die Oberseite der Hülle eine obere Schicht und eine untere Schicht aufweisen, zwischen welcher einer Polsterschicht angeordnet ist. Die obere Schicht kann dann die Sitzfläche bilden. Entsprechend kann die untere Schicht der Sitzfläche abgewandt sein und/oder der Unterseite der Hülle zugewandt. Die Polsterschicht kann beispielsweise durch Watte, Schaumstoff und/oder Daunen gebildet sein. Die obere Schicht und/oder untere Schicht kann beispielsweise eine Textilschicht sein. Die untere und/oder obere Schicht der Oberseite, bevorzugt die untere Schicht, kann beispielsweise auch durch ein wasserundurchlässiges Material wie ein Kunstleder und/oder ein Kunststoff gebildet sein, um so unter der Tierdecke befindliche Flächen vor Verschmutzungen besonders gut schützen zu können. So kann beispielsweise verhindert werden, dass ein nasser Hund in einem Innenraum des Kraftfahrzeugs auch zu einem nassen Rücksitz des Kraftfahrzeugs führt. Die Unterseite der Hülle kann dagegen diese Funktion nur eingeschränkt übernehmen, da hier Flüssigkeit noch durch die Zugangsöffnung treten kann.

Vorzugsweise sind zwischen der oberen Schicht und der unteren Schicht der Oberseite einzelne Kammern mit jeweiligen zugeordneten Polsterschichten vorgesehen, welche voneinander im Wesentlichen abgetrennt sind. Diese Abtrennung kann beispielsweise durch eine Steppung erfolgen. Die zugeordneten Polsterschichten können dabei auch durch ein einzelnes, durchgehendes Polsterelement gebildet sein, welches jeweils zugeordnet in den Kammern durch die Steppung fixiert ist. Alternativ kann die Polsterschicht auch durch einzelne, zugeordnete separate Polsterschichtteile gebildet sein, welche so jeweils fixiert sind. Die Polsterung kann beispielsweise eine Waffelstruktur aufweisen. Insgesamt kann so ein Verrutschen jeweiliger Polsterschichtteile und/oder Polsterelemente in der Oberseite verhindert werden. Beispielsweise kann sonst eine einzelne, durchgehende und nicht in der Fläche wenigstens bereichsweise fixierte Polsterschicht leicht durch eine Bewegung eines Tieres auf der Sitzfläche zwischen der oberen und der unteren Schicht verschoben und/oder zusammengefaltet werden, ohne dass sich dabei notwendigerweise auch die Hülle selbst verschiebt und/oder zusammenfaltet. Zudem kann eine solche Struktur der Polsterschicht auch besonders hochwertig wirken.

Vorzugsweise ist die Sitzfläche rechteckig ausgebildet, wobei insbesondere die flache Hülle eine rechteckige Grundform aufweist. Bevorzugt kann die Sitzfläche und/oder die Hülle in ihrer Haupterstreckungsrichtung quadratisch ausgebildet sein. Die rechteckige Form ist besonders kostengünstig zu fertigen und kann zudem besonders einfach an die zugeordnete Tiertransportvorrichtung und deren Bodenfläche angepasst werden.

Vorzugsweise ist ein äußerer Rand der Hülle durch eine umlaufende Verstärkung eingefasst. Der äußere Rand der Hülle kann durch eine die Oberseite mit der Unterseite verbindende Kante der Hülle definiert sein. Durch die Verstärkung kann die Hülle besonders robust sein, insbesondere können jeweilige Außenränder vor Abrieb geschützt werden. Zudem kann die Verstärkung des äußeren Rands der Hülle auch einen Bereich verstärken, an welchem sich das Spannelement zum flachen Aufspannen der Hülle abstützt. Insgesamt ist die Tierdecke so besonders robust.

Vorzugsweise umfasst die Oberseite und/oder die Unterseite der Hülle Leder, Kunstleder und/oder Textil als Werkstoff. Insbesondere kann die Oberseite und/oder die Unterseite der Hülle aus diesen Werkstoffen bestehen. Jeweilige Verstärkungen der Tierdecke können ebenfalls diese Werkstoffe umfassen und/oder aus diesen Werkstoffen bestehen. Leder ist dabei ein besonders hochwertiges und robustes Material. Kunstleder ist besonders kostengünstig herstellbar. Ein Textil ist besonders leicht zu reinigen. Jeweilige Elemente der Tierdecke können dabei aus unterschiedlichen Materialien gebildet sein. Beispielsweise kann die Oberseite der Tierdecke bzw. deren obere Schicht aus einem besonders hochwertig anmutenden Material gebildet sein, während die Unterseite aus einem besonders leichten und rutschfesten Material gebildet ist. Die untere Schicht der Oberseite der Hülle ist dabei vorzugsweise fluiddicht ausgebildet. Zum Zwecke der Rutschhemmung können an der Unterseite der Tierdecke auch jeweilige Gummielemente angeordnet sein.

Vorzugsweise ist die Tierdecke maschinenwaschbar ausgebildet. Insbesondere kann dafür die Hülle maschinenwaschbar ausgebildet sein und das Spannelement vor der Maschinenwäsche aus dem Freiraum bzw. dem Inneren der Hülle entnommen werden.

Erfindungsgemäß ist das Spannelement der Tierdecke als Ring mit einem einstellbaren Ringdurchmesser ausgebildet ist. Dafür kann das Spannelement eine Einstellvorrichtung für seinen Ringdurchmesser umfassen. Dadurch kann das Spannelement in seiner Größe verändert werden, um so den Radius des Spannelements bzw. Spannrings an die Größe der Tierdecke anpassen zu können. Damit kann die Tierdecke zudem besonders sicher und gut straff aufgespannt werden. Gerade bei besonders großen Tierdecken ist dies von Vorteil. Zudem kann so die Entnahme des Spannelements aus der Hülle erleichtert werden, indem der Ringdurchmesser des Spannelements verkleinert wird. Gleichermaßen ist so ein Anordnen bzw. Einlegen in die Hülle auch besonders einfach möglich. Der Transport und das Verstauen der Tierdecke kann durch einen nicht aufgespannten Zustand sowohl der Tierdecke als auch des Spannelements besonders einfach und platzsparend sein.

Erfindungsgemäß lässt sich der Ringdurchmesser um mindestens 50%, bevorzugt 75%, besonders bevorzugt 100% variieren, insbesondere bezogen auf den kleinsten und/oder größten Ringdurchmesser. Der kleinste Ringdurchmesser kann dabei als ein Ringdurchmesser definiert sein, bei welchem es gerade noch nicht zu einer dauerhaften Verformung und/oder Bruch des Stabs kommt und/oder bei welchem die wenigstens eine Manschette gerade noch den Stab in der Ringform halten kann. Der größte Ringdurchmesser kann dabei als ein Ringdurchmesser definiert sein, bei welchem die Stabendbereiche gerade noch nicht aus der Manschette gleiten und/oder bei welchem das Spannelement noch in dem Freiraum der Hülle aufgenommen werden kann. Der größte Ringdurchmesser kann also zu einer Größe der flachen Hülle in ihrer Haupterstreckungsebene korrespondieren.

Vorzugsweise umfasst das Spannelement einen biegsamen Stab, der mittels einer Manschette ringförmig gehalten ist, wobei jeweilige Stabendbereiche zum Einstellen des Ringdurchmessers in der Manschette verschiebbar aufgenommen sind. Eine solche Bauweise des Spannelements mit einstellbarem Ringdurchmesser kann besonders robust, einfach und kostengünstig sein. Auch das Verstellen bzw. Einstellen des Ringdurchmessers kann so besonders einfach möglich sein. Es werden insbesondere keine beweglichen Teile benötigt, zur Ringdurchmesserveränderung werden lediglich die Stabendbereiche in der Manschette verschoben, um so die Krümmung des Stabes zu verändern. Für einen kleineren Ringdurchmesser wird der Stab stärker gekrümmt, für einen großen Ringdurchmesser wird der Stab weniger stark gekrümmt. Der biegsame Stab wird in der gewünschten Krümmung durch seine Elastizität und somit erzeugte Rückstellkraft in Richtung einer im Wesentlichen geraden Form und Reibung an der Manschette gehalten. Der Stab kann beispielsweise ungekrümmt und somit in einem im Wesentlichen geraden Zustand platzsparend und einfach transportiert werden. Der Stab kann aber auch zum Transport stark gekrümmt eingerollt werden, um als Ring mit kleinem Durchmesser geformt zu sein.

Bei starken Krümmungen kann der Stab mehrere Ringwicklungen bilden und entsprechend zusätzliche Bereiche des Stabs in der Manschette, wie ein Mittenbereich, aufgenommen sein. Das Spannelement kann auch mehrere Manschetten aufweisen, welche zusätzlich weitere Bereiche des Stabes halten, insbesondere bei mehreren Wicklungen, um den Stab besonders gut in der Ringform zu halten. Die Manschette kann beispielsweise ein biegeschlaffes Element sein, welches um den Stab an seinen Endbereichen gelegt ist, und damit eine Rückkehr des Stabs in eine im Wesentlichen gerade Form verhindert.

Vorzugsweise ist der biegsame Stab als Glasfaserstab, Kohlefaserstab, Kunststoffstab und/oder Metallstab ausgebildet. Ein Glasfaserstab oder Kohlefaserstab ist besonders leicht, robust und kann zudem besonders stark ohne eine permanente Verformung oder Beschädigung gekrümmt werden. Ein Kunststoffstab kann besonders kostengünstig und ebenfalls sehr leicht sein. Ein Metallstab, insbesondere aus einem Federstahl, kann besonders robust sein und zudem sehr hohe Rückstellkräfte bei einer Krümmung aufweisen, sodass die Tierdecke sehr straff aufgespannt wird und auch hohe resultierende Reibkräfte den Stab sicher in seiner eingestellten Krümmung und damit in dem eingestellten Ringdurchmesser halten.

Vorzugsweise umfasst die Manschette Leder, Kunstleder und/oder Textil als Werkstoff. Leder ist dabei ein besonders hochwertiges und robustes Material. Kunstleder ist besonders kostengünstig herstellbar. Ein Textil ist besonders leicht zu reinigen.

Vorzugsweise ist die Manschette öffenbar, um die jeweiligen Stabendbereiche des biegsamen Stabs freizugeben. Beispielsweise ist die Manschette aus einem um die jeweiligen Stabendbereiche geschlungenen Textil gebildet, welches öffenbar ist, um die Rückkehr des Stabs in seine gerade Form zu ermöglichen. Das Spannelement kann so zum einfachen und platzsparenden Transport und zur Wartung zerlegt werden. Vorzugsweise umfasst die Manschette hierzu einen Verschluss, insbesondere einen Druckknopf. Mittels des Verschlusses kann ein ungewolltes Öffnen der Manschette und somit ungewolltes Freigeben der Stabendbereiche und daraus resultierende Rückkehr des Stabs in seine gerade Form zuverlässig verhindert werden. Ein Druckknopf ist dabei ein kostengünstiges, einfach zu bedienendes und leichtes Beispiel für einen solchen Verschluss. Es können auch mehrere Verschlüsse vorgesehen sein, um eine längliche Form der geschlossenen Manschette besonders gut zu halten. Weitere Beispiele für einen Verschluss sind ein Reißverschluss, Klettverschluss und eine Schnürung.

Ein zweiter Aspekt der Erfindung betrifft ein Tiertransportsystem umfassend eine Tiertransportvorrichtung zur Anordnung in einem Innenraum eines Kraftfahrzeugs mit wenigstens einem eine Bodenfläche ausbildenden Bodenelement und mit wenigstens einem eine Seitenfläche ausbildenden Seitenelement, welche zusammen einen Aufnahmeraum der Tiertransportvorrichtung definieren, und eine an oder in der Tiertransportvorrichtung angeordnete Tierdecke gemäß dem ersten Aspekt der Erfindung, wobei die Sitzfläche der Tierdecke zu der Bodenfläche der Tiertransportvorrichtung korrespondiert. Die Sitzfläche der Tierdecke und die Bodenfläche der Tiertransportvorrichtung können im Wesentlichen gleich groß sein. Die Außenkanten der im Wesentlichen flachen Hülle können zu jeweiligen Enden bzw. Außenkanten der Bodenfläche korrespondieren und/oder an dieser angrenzen. Zudem kann die Tierdecke auch seitlich an dem Seitenelement angrenzen. Insbesondere können bei mehreren vorgesehenen Seitenelementen jeweilige Außenkanten der Hülle bei komplett ausgebreiteter Tierdecke an jeweilige Seitenflächen bzw. Seitenelementen angrenzen. Eine voll ausgebreitete Tierdecke entspricht dabei im Wesentlichen dem aufgespannten Zustand der Hülle. In diesem Zustand weist die Tierdecke vorzugsweise keine Wölbung und/oder Aufbauschung auf der Sitzfläche auf. Vorzugsweise ist die Bodenfläche der Tiertransportvorrichtung von der daran oder darin angeordneten Tierdecke im Wesentlichen komplett bedeckt.

Durch die korrespondierende Größe kann die Tierdecke besonders einfach in oder an der Tiertransportvorrichtung angeordnet werden. Insbesondere gibt es so keine Freibereiche an den Rändern, an welchen ein Tier auf der Sitzfläche die Tierdecke anheben und/oder verschieben könnte. Gleichzeitig ist so die Tiertransportvorrichtung, insbesondere deren Bodenfläche, besonders gut durch die Tierdecke vor Verschmutzungen und Beschädigungen geschützt, während die Tierdecke selbst leicht entnommen und gereinigt werden kann. Dadurch ist das Tiertransportsystem besonders komfortabel zu nutzen.

Vorzugsweise ist die Tiertransportvorrichtung dazu ausgebildet, an einem Fahrzeugsitz des Kraftfahrzeugs befestigt zu werden. Beispielsweise kann die Tiertransportvorrichtung mittels eines sogenannten Isofix-Systems an einem Rücksitz des Kraftfahrzeugs über der Sitzfläche des Rücksitzes befestigt werden. Durch das Tiertransportsystem ist dabei der Innenraum des Kraftfahrzeugs besonders gut vor Verschmutzungen und/oder Beschädigungen durch das zu transportierende Tier geschützt.

Vorzugsweise ist die Tierdecke im Aufnahmeraum der Tiertransportvorrichtung angeordnet, insbesondere auf der Bodenfläche. Vorzugsweise ist dabei die Unterseite der Hülle der Bodenfläche zugewandt und die Sitzfläche der Hülle der Bodenfläche abgewandt. Dadurch ist die Sitzfläche der Tierdecke dem Aufnahmeraum zugewandt, wodurch hier für das zu transportierende Tier ein besonders komfortabler Aufnahmeraum geschaffen wird.

Die Tierdecke gemäß dem ersten Aspekt der Erfindung eignet sich also für die Verwendung in dem Tiertransportsystem gemäß dem zweiten Aspekt der Erfindung. Die sich aus der Tierdecke gemäß dem ersten Aspekt der Erfindung ergebenden Merkmale und Vorteile sind der Beschreibung des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in der Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
Fig. 1 zeigt ein Tiertransportsystem mit einer Tierdecke.
Fig. 2 zeigt schematisch ein einstellbares Spannelement der Tierdecke gemäß Fig. 1 in einem ersten Zustand.
Fig. 3 zeigt schematisch ein einstellbares Spannelement der Tierdecke gemäß Fig. 1 in einem zweiten Zustand.
Fig. 4 zeigt schematisch ein einstellbares Spannelement der Tierdecke gemäß Fig. 1 in einem zerlegten Zustand.

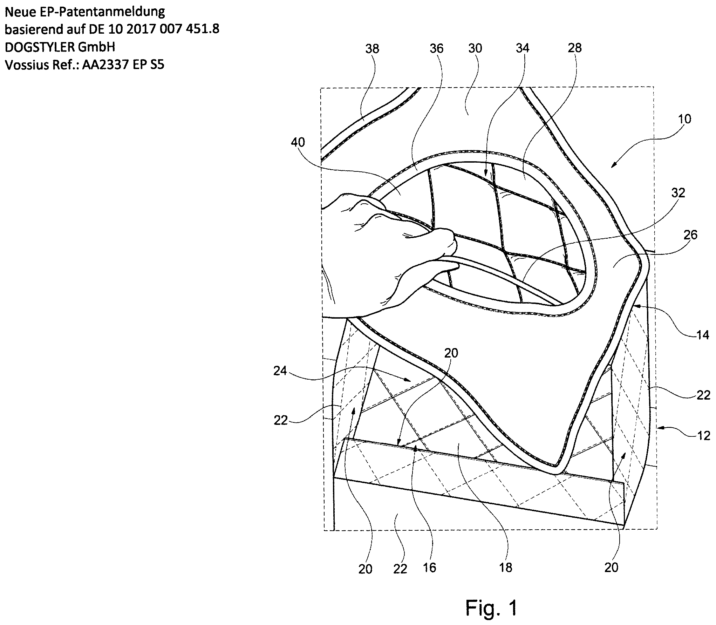

Fig. 1 zeigt ein Tiertransportsystem 10, welches eine Tiertransportvorrichtung 12 und eine Tierdecke 14 umfasst. Die Tiertransportvorrichtung 12 ist zur Anordnung in einem Innenraum eines Kraftfahrzeugs ausgebildet. Vorzugsweise kann die Tiertransportvorrichtung 12 dabei sicher an einem Rücksitz eines Kraftfahrzeugs befestigt werden, beispielsweise mittels eines Isofix-Systems. Die Tiertransportvorrichtung 12 umfasst dabei wenigstens ein eine Bodenfläche 16 ausbildendes Bodenelement 18 und mehrere jeweilige Seitenflächen 20 ausbildende Seitenelemente 22, welche zusammen einen Aufnahmeraum 24 der Tiertransportvorrichtung 12 definieren. In diesem Aufnahmeraum 24 kann ein Tier, wie beispielsweise ein Hund, sicher transportiert werden, ohne dass dieses durch abrupte Beschleunigung und Abbremsvorgänge durch den Innenraum des Kraftfahrzeugs geschleudert werden kann.

Die Tierdecke 14 ist zur Anordnung in dem Aufnahmeraum 24 auf der Bodenfläche 16 ausgebildet. Die Tierdecke 14 umfasst dabei eine im Wesentlichen flache Hülle 26, welche eine Oberseite 28 und eine Unterseite 30 aufweist. In Fig. 1 ist dabei gezeigt, wie die Tierdecke 14 aus dem Aufnahmeraum 24 der Tiertransportvorrichtung 12 entnommen wird. Entsprechend ist die Tierdecke 14 hier gegenüber einer Position für deren Benutzung gedreht und die Unterseite 30 einer Blickrichtung des Betrachters zugewandt.

Zur Anordnung in dem Aufnahmeraum 24 wird die Tierdecke 14 vorzugsweise derart gedreht, so dass die Oberseite 28 der Hülle 26 nach oben von der Bodenfläche 16 weg weist. Die Oberseite 28 bildet dabei eine Sitzfläche für das zu transportierende Tier, welche in Fig. 1 nicht gezeigt ist. Die Unterseite 30 der Hülle 26 ist entsprechend von dieser Sitzfläche der Tierdecke 14 abgewandt. Bei der korrekten Anordnung der Tierdecke 14 an der Tiertransportvorrichtung 12 ist die Unterseite 30 der Hülle 26 dann der Bodenfläche 16 des Bodenelements 18 zugewandt und liegt auf dieser auf.

Weiterhin weist die Tierdecke 14 ein Spannelement 32 auf, welches aus einem Kunststoff oder Federstahl ausgebildet ist. Im eingebauten Zustand ist das Spannelement 32 dabei innerhalb der Hülle 26 in einem Freiraum zwischen der Oberseite 28 und der Unterseite 30 angeordnet. Das Spannelement 32 ist dabei dazu ausgebildet, die Hülle 26, deren Unterseite 30 und deren Oberseite 28 selber biegeschlaff ausgebildet ist, im Wesentlichen flach aufzuspannen. Dadurch wird die Tierdecke 14 in einem zu der Form der Bodenfläche 18 der Tiertransportvorrichtung 12 korrespondierenden Zustand gehalten. Die Sitzfläche der Tierdecke 14 ist dabei im Wesentlichen identisch zu der Bodenfläche 16 der Tiertransportvorrichtung.

Weiterhin weist die Unterseite 30 der Hülle eine Zugangsöffnung 34 auf, mittels welcher das Spannelement 32 in die Hülle 26 eingelegt werden kann und aus dieser entnommen werden kann. In Fig. 1 ist dabei zu erkennen, wie das Spannelement 32 mit einer Hand verformt wird, um dieses aus der Zugangsöffnung 34 aus dem Inneren der Hülle 26 zu entnehmen. Dadurch kann die Hülle 26 besonders einfach gereinigt und auch platzsparend verstaut werden.

Mit dem in der Hülle 26 angeordneten Spannelement 32 kann dagegen bewirkt werden, dass die Tierdecke 12 auch bei einer Bewegung des Tieres in dem Aufnahmeraum 24 nicht verschoben, geknickt und/oder zerknüllt wird. Dadurch ist zum einen die Bodenfläche 16 immer vor Verschmutzungen und/oder Beschädigungen geschützt und zum anderen immer eine glatte und komfortable Sitzfläche für das zu transportierende Tier sichergestellt. Dadurch ist der Transport für das Tier besonders angenehm und die Akzeptanz des Tiertransportsystems 10 besonders hoch. Dadurch kann das Tier besonders ruhig sein und somit den Fahrer des Kraftfahrzeugs besonders wenig ablenken.

Die Unterseite 30 der Hülle 26 ist dabei beispielswiese aus einem textilen Werkstoff gebildet, wobei ein Rand der Zugangsöffnung 34 durch eine Verstärkung 36 eingefasst ist. Durch diese Verstärkung 36 kann eine Beschädigung der Hülle 26 auch bei einer häufigen Entnahme und Wiedereinführung des Spannelements 32 durch die Zugangsöffnung 34 verhindert werden.

Außenseitig umlaufend weist die Hülle 26 eine weitere Verstärkung 38 auf, mittels welcher die Unterseite 30 und die Oberseite 28 der Hülle 26 miteinander an einer Kante verbunden sind. Auch dadurch kann die Hülle 26 besonders robust sein. Zudem wird durch diese Versteifung 38 ein Bereich der Hülle 26 verstärkt, an welchem sich das Spannelement 32 innenseitig abstützt. Dadurch kann das Spannelement 32 besonders hohe Vorspannkräfte auf einen äußeren umlaufenden Rand der Hülle 26 im Inneren ausüben, ohne dass die Hülle 26 dabei überlastet und möglicherweise beschädigt wird.

Die Oberseite 28 der Hülle 26 umfasst im vorliegenden Beispiel drei Schichten. Eine untere, der Unterseite 30 zugewandte textile Schicht 40 fasst dabei mit einer die Sitzfläche bildenden oberen Schicht (hier nicht gezeigt) einen Hohlraum ein, welcher durch eine darin angeordnete Polsterung im Wesentlichen ausgefüllt ist. Die untere Schicht 40 und die obere Schicht der Oberseite 28 sind dabei rautenförmig miteinander versteppt, um einzelne Kammern für die Polsterung zu bilden und deren Position zwischen der unteren Schicht 40 und der oberen Schicht sicher zu fixieren. Dadurch ergibt sich die in Fig. 1 erkennbare waffelartige Struktur der Oberseite 28. Hiermit kann bei einer Bewegung des Tieres auf der Sitzfläche der Tierdecke 12 ein Verschieben der Polsterung innerhalb der unteren Schicht 40 und der oberen Schicht der Oberseite 28 zuverlässig verhindert werden. Zudem ist die Tierdecke 14 so optisch und haptisch besonders ansprechend.

Die Tierdecke 14 und die Bodenfläche 16 der Tiertransportvorrichtung 12 haben jeweils eine rechteckige Grundform. Diese Form ist besonders kostengünstig und korrespondiert zudem besonders gut zu einer Sitzfläche des Rücksitzes des Kraftfahrzeugs. Jeweilige Ecken der Hülle 26, an welchen sich innenseitig der runde Ring des Spannelements 32 nicht abstützt, werden dabei durch jeweiliges Auseinanderdrücken gegenüberliegender Seiten der Hülle 26 durch das Spannelement 32 zuverlässig mit aufgespannt. Entsprechend kann ein simpel geformtes Spannelement 32 verwendet werden, wie vorliegend beispielsweise ein kreisrunden Spannring.

Das Tiertransportsystem 10 ist für jeweilige Benutzer besonders komfortabel, da die Hülle 26, welche häufig den meisten Verschmutzungen ausgesetzt ist, besonders einfach in einer Waschmaschine gereinigt werden kann. Zudem passt sich die Tierdecke 12 durch ihr Aufspannen automatisch der Bodenfläche 16 an, so dass sie besonders einfach in den Aufnahmeraum 24 eingelegt und aus diesem wieder entnommen werden kann. Zudem ist auch nach Bewegungen des Tieres weiterhin eine komfortable Sitzfläche für dieses gewährleistet, wodurch das Tier jederzeit ruhig und komfortabel transportiert werden kann.

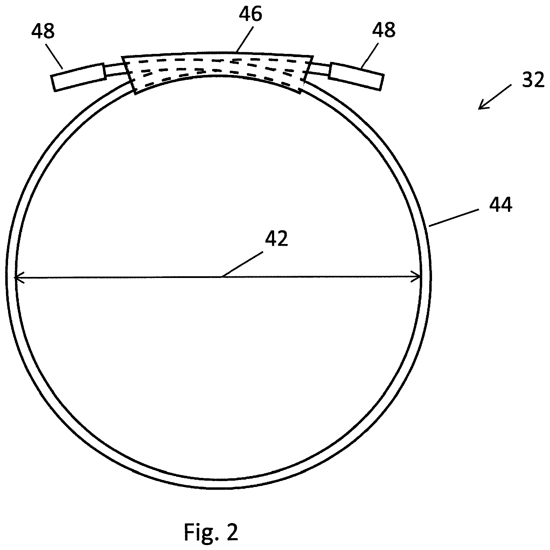

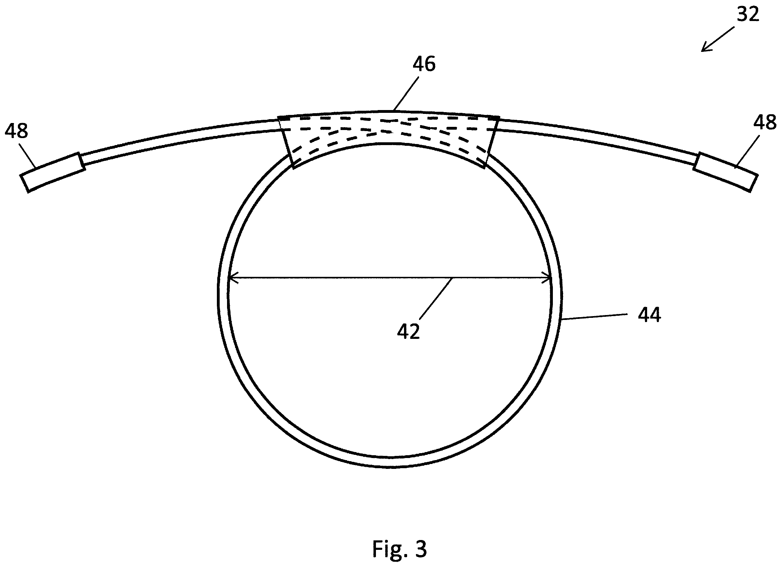

Fig. 2 zeigt ein Spannelement 32 für die Tierdecke 14 gemäß Fig. 1, dessen Ringdurchmesser, veranschaulicht durch Pfeil 42, eingestellt werden kann. Fig. 2 zeigt dabei einen ersten Zustand mit einem großen Ringdurchmesser 42, Fig. 3 einen zweiten Zustand mit einem im Vergleich kleineren Ringdurchmesser 42.

Das Spannelement 32 umfasst zu diesem Zweck einen biegsamen Stab 44, welcher mit einer Manschette 46 in Ringform gehalten ist. Jeweilige Endbereiche des Stabs 44 können zum Einstellen des Ringdurchmessers relativ zueinander und zur Manschette 46 verschoben werden. Je größer der Bereich ist, der aus der Manschette 46 hervor steht, desto kleiner ist der Radius des Spannelements, und umgekehrt. Die Manschette 46 hält dabei die Stabendbereiche durch Reibung aufgrund der Rückkehrkraft des Stabs 44, welcher ohne Manschette 46 flexibel in eine im Wesentlichen gerade Form zurückkehrt. Das Drücken der Stabendbereiche gegen die Manschette 46 ist auch aufgrund der gestrichelten Darstellung des Stabs 44 in dem Bereich, in welchem die Manschette diesen verdeckt, gut zu erkennen.
Durch den einstellbaren Ringdurchmesser 42 kann die Spannkraft, mit welcher die Tierdecke 14 aufgespannt wird, eingestellt werden. Zudem kann das Spannelement 32 bei einem kleinen eingestellten Ringdurchmesser 42 besonders einfach in die Hülle 26 (vgl. Fig. 2) eingelegt und/oder aus dieser entnommen werden. Auch zum Transport und Verstauen des Spannelements 32 bzw. der Tierdecke 14 kann so die Größe angepasst werden.

Der Stab 44 weist an seinen beiden Enden jeweils ein Kopfelement 48 auf. Dieses Kopfelement 48 verhindert jeweils, dass ein Stabendbereich aus der Manschette 46 rutscht und das Spannelement 32 somit versehentlich zerlegt wird.

Der Stab 44 ist beispielsweise als elastischer Glasfaserstab ausgebildet. Die Manschette 46 ist beispielsweise ein Stück Kunstleder, welches um die Stabendbereiche gewickelt werden kann.

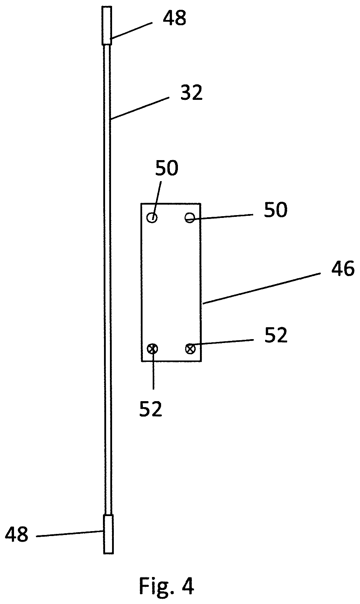

Fig. 3 veranschaulicht einen zerlegten Zustand des Spannelements 32. Dabei ist zu erkennen, wie der Stab 32 in seine gerade Ausgangsform zurückkehrt ist. Zum Zerlegen kann die Manschette 46 geöffnet werden, wie dies ebenfalls in Fig. 4 dargestellt ist. Dazu umfasst die Manschette 46 z.B. zwei Druckknöpfe, welche in Fig. 4 geöffnet sind. Entsprechend sind zwei Druckknopfaufnahmen 50 und zwei Kopfteile 52 gezeigt, welche an jeweiligen Manschettenendbereichen angeordnet sind. Durch das Öffnen der Druckknöpfe kann die Manschette 46 ebenfalls geöffnet werden und den Stab 32 freigeben. Durch das Zerlegen kann das Spannelement 32 besonders einfach transportiert, gelagert und gewartet werden.

### Bezugszeichenliste

- 10: Tiertransportsystem
- 12: Tiertransportvorrichtung
- 14: Tierdecke
- 16: Bodenfläche
- 18: Bodenelement
- 20: Seitenfläche
- 22: Seitenelement
- 24: Aufnahmeraum
- 26: Hülle
- 28: Oberseite
- 30: Unterseite
- 32: Spannelement
- 34: Zugangsöffnung
- 36: Verstärkung
- 38: Verstärkung
- 40: untere Schicht
- 42: Ringdurchmesser
- 44: Stab
- 46: Manschette
- 48: Kopfelement
- 50: Druckknopfaufnahmen
- 52: Kopfteil

## Patentansprüche

1. Tierdecke (14) zur Anordnung in oder an einer Tiertransportvorrichtung (12) mit einer eine Oberseite (28) und eine Unterseite (30) umfassenden und im Wesentlichen flachen Hülle (26), wobei die Oberseite (28) eine Sitzfläche für ein Tier bildet und die Unterseite (30) der Hülle (26) von der Sitzfläche abgewandt ist, und mit einem Spannelement (32), welches innerhalb der Hülle (26) in einem Freiraum zwischen der Oberseite (28) und der Unterseite (30) angeordnet und als Ring mit einem einstellbaren Ringdurchmesser (42) ausgebildet ist und dazu ausgebildet ist, die Hülle (26) im Wesentlichen flach aufzuspannen, wobei sich der Ringdurchmesser um mindestens 50% variieren lässt, und wobei die Unterseite (30) eine Zugangsöffnung (34) zu dem Freiraum aufweist.

2. Tierdecke (14) nach Anspruch 1, wobei
das Spannelement (32) aus einem flexiblen Material gebildet ist.

3. Tierdecke (14) nach einem der Ansprüche 1 oder 2, wobei
das Spannelement (32) als Ring ausgebildet ist, insbesondere als flexibler Ring.

4. Tierdecke (14) nach einem der vorhergehenden Ansprüche, wobei
das Spannelement (32) aus der Hülle (26) durch die Zugangsöffnung (34) entnehmbar ist.

5. Tierdecke (14) nach einem der vorhergehenden Ansprüche, wobei
eine die Zugangsöffnung (34) begrenzender Rand der Hülle (26) durch eine umlaufende Verstärkung (36) eingefasst ist.

6. Tierdecke (14) nach einem der vorhergehenden Ansprüche, wobei
die Tierdecke (14) eine Polsterung umfasst, insbesondere eine Polsterung an der Oberseite (28).

7. Tierdecke (14) nach einem der vorhergehenden Ansprüche, wobei
die Sitzfläche rechteckig ausgebildet ist, insbesondere wobei die flache Hülle (26) eine rechteckige Grundform aufweist.

8. Tierdecke (14) nach einem der vorhergehenden Ansprüche, wobei
ein äußerer Rand der Hülle (26) durch eine umlaufende Verstärkung (38) eingefasst ist.

9. Tierdecke (14) nach einem der vorhergehenden Ansprüche, wobei
die Oberseite (28) und/oder die Unterseite (30) der Hülle Leder, Kunstleder und/oder Textil als Werkstoff umfasst.

10. Tierdecke (14) nach Anspruch 1, wobei
das Spannelement (32) einen biegsamen Stab (44) umfasst, der mittels einer Manschette (46) ringförmig gehalten ist, wobei jeweilige Stabendbereiche zum Einstellen des Ringdurchmessers (42) in der Manschette (46) verschiebbar aufgenommen sind.

11. Tierdecke (14) nach Anspruch 10, wobei
der biegsame Stab (44) als Glasfaserstab, Kunststoffstab und/oder Metallstab ausgebildet ist.

12. Tierdecke (14) nach einem der Ansprüche 10 oder 11, wobei
die Manschette (46) Leder, Kunstleder und/oder Textil als Werkstoff umfasst.

13. Tierdecke (14) nach einem der Ansprüche 10 bis 12, wobei
die Manschette (46) öffenbar ist, um die jeweiligen Stabendbereiche des biegsamen Stabs (44) freizugeben, wobei die Manschette (46) hierzu vorzugsweise einen Verschluss umfassen kann, insbesondere einen Druckknopf.

14. Tiertransportsystem (10) umfassend
eine Tiertransportvorrichtung (12) zur Anordnung in einem Innenraum eines Kraftfahrzeugs mit wenigstens einem eine Bodenfläche (16) ausbildenden Bodenelement (18) und mit wenigstens einem eine Seitenfläche (20) ausbildenden Seitenelement (22), welche zusammen einen Aufnahmeraum (24) der Tiertransportvorrichtung (12) definieren,
und eine an oder in der Tiertransportvorrichtung (12) angeordnete Tierdecke (14) nach einem der vorhergehenden Ansprüche,
wobei die Sitzfläche der Tierdecke (14) zu der Bodenfläche (16) der Tiertransportvorrichtung (12) korrespondiert.

## Claims

1. An animal blanket (14) for arranging in or at an animal transport device (12) with a sheath (26) comprising an upper side (28) and a lower side (30) and being substantially flat, wherein the upper side (28) forms a seat surface for an animal and the lower side (30) of the sheath (26) faces away from the seat surface, and with a tensioning element (32) which is arranged within the sheath (26) in a clearance between the upper side (28) and the lower side (30) and configured as a ring with an adjustable ring diameter (42) and which is configured to span the sheath (26) in a substantially flat manner, wherein the ring diameter may be varied by at least 50%, and wherein the lower side (30) comprises an access opening (34) to the clearance.

2. The animal blanket (14) according to claim 1, wherein
the tensioning element (32) is formed of a flexible material.

3. The animal blanket (14) according to any one of claims 1 or 2, wherein
the tensioning element (32) is configured as a ring, particularly a flexible ring.

4. The animal blanket (14) according to any one of the preceding claims, wherein
the tensioning element (32) is removable from the sheath (26) via the access opening (34).

5. The animal blanket (14) according to any one of the preceding claims, wherein an edge of the sheath (26) limiting the access opening (34) is lined with a circumferential reinforcement (36).

6. The animal blanket (14) according to any one of the preceding claims, wherein the animal blanket (14) comprises a padding, particularly a padding on the upper side (28).

7. The animal blanket (14) according to any one of the preceding claims, wherein the seat surface is configured rectangularly, particularly wherein the flat sheath (26) comprises a rectangular basic shape.

8. The animal blanket (14) according to any one of the preceding claims, wherein an outer edge of the sheath (26) is lined with a circumferential reinforcement (38).

9. The animal blanket (14) according to any one of the preceding claims, wherein the upper side (28) and/or the lower side (30) of the sheath comprises leather, synthetic leather and/or textiles as a material.

10. The animal blanket (14) according to claim 1, wherein
the tensioning element (32) comprises a flexible bar (44) which is retained annularly by a sleeve (46), wherein respective bar end portions are movably mounted for adjusting the ring diameter (42) in the sleeve (46).

11. The animal blanket (14) according to claim 10, wherein
the flexible bar (44) is configured as a glass fiber bar, plastic bar and/or metal bar.

12. The animal blanket (14) according to any one of claims 10 or 11, wherein
the sleeve (46) comprises leather, synthetic leather and/or textiles as a material.

13. The animal blanket (14) according to any one of claims 10 to 12, wherein
the sleeve (46) is openable in order to release the respective bar end portions of the flexible bar (44), wherein the sleeve (46) may preferably comprise a fastener, particularly a snap fastener.

14. An animal transport system (10) comprising
an animal transport device (12) for arrangement in an interior of a motor vehicle with at least one floor element (18) forming a floor surface (16) and with at least one side element (22) forming a side surface (20) which together define a receiving space (24) of the animal transport device (12),
and an animal blanket (14) according to any one of the preceding claims arranged at or in the animal transport device (12),
wherein the seat surface of the animal blanket (14) corresponds to the floor surface (16) of the animal transport device (12).

## Revendications

1. Couverture pour animaux (14) destinée à être disposée dans ou au niveau d'un dispositif de transport d'animaux (12) avec une enveloppe (26) comprenant une face supérieure (28) et une face inférieure (30) et sensiblement plate, dans laquelle la face supérieure (28) forme une surface d'assise pour un animal et la face inférieure (30) de l'enveloppe (26) est détournée de la surface d'assise, et avec un élément de serrage (32), lequel est disposé à l'intérieur de l'enveloppe (26) dans un espace libre entre la face supérieure (28) et la face inférieure (30) et est réalisé en tant qu'anneau avec un diamètre d'anneau (42) pouvant être réglé et est réalisé pour étirer sensiblement à plat l'enveloppe (26), dans laquelle le diamètre d'anneau est variable d'au moins 50 %, et dans laquelle la face inférieure (30) présente une ouverture d'accès (34) vers l'espace libre.

2. Couverture pour animaux (14) selon la revendication 1, dans laquelle
l'élément de serrage (32) est formé à partir d'un matériau flexible.

3. Couverture pour animaux (14) selon l'une quelconque des revendications 1 ou 2, dans laquelle
l'élément de serrage (32) est réalisé en tant qu'anneau, en particulier en tant qu'anneau flexible.

4. Couverture pour animaux (14) selon l'une quelconque des revendications précédentes, dans laquelle
l'élément de serrage (32) peut être enlevé de l'enveloppe (26) par l'ouverture d'accès (34).

5. Couverture pour animaux (14) selon l'une quelconque des revendications précédentes, dans laquelle
un bord, délimitant l'ouverture d'accès (34), de l'enveloppe (26) est encadré par un renforcement (36) périphérique.

6. Couverture pour animaux (14) selon l'une quelconque des revendications précédentes, dans laquelle
la couverture pour animaux (14) comprend un rembourrage, en particulier un rembourrage au niveau de la face supérieure (28).

7. Couverture pour animaux (14) selon l'une quelconque des revendications précédentes, dans laquelle
la surface d'assise est réalisée de manière rectangulaire, en particulier dans laquelle l'enveloppe (26) plate présente une forme de base rectangulaire.

8. Couverture pour animaux (14) selon l'une quelconque des revendications précédentes, dans laquelle
un bord extérieur de l'enveloppe (26) est encadré par un renforcement (38) périphérique.

9. Couverture pour animaux (14) selon l'une quelconque des revendications précédentes, dans laquelle
la face supérieure (28) et/ou la face inférieure (30) de l'enveloppe comprennent du cuir, du cuir synthétique et/ou du textile en tant que matériau.

10. Couverture pour animaux (14) selon la revendication 1, dans laquelle
l'élément de serrage (32) comprend une barre (44) souple, qui est maintenue de manière à présenter une forme annulaire au moyen d'une manchette (46), dans laquelle des zones d'extrémité de barre respectives sont logées de manière à pouvoir coulisser dans la manchette (46) pour régler le diamètre d'anneau (42).

11. Couverture pour animaux (14) selon la revendication 10, dans laquelle
la barre (44) souple est réalisée en tant que barre en fibres de verre, barre en matière plastique et/ou barre en métal.

12. Couverture pour animaux (14) selon l'une quelconque des revendications 10 ou 11, dans laquelle
la manchette (46) comprend du cuir, du cuir synthétique et/ou du textile en tant que matériau.

13. Couverture pour animaux (14) selon l'une quelconque des revendications 10 à 12, dans laquelle
la manchette (46) peut être ouverte afin de dégager les zones d'extrémité de barre respectives de la barre (44) souple, dans laquelle la manchette (46) peut comprendre à cet effet de préférence une fermeture, en particulier un bouton-pression.

14. Système de transport d'animaux (10) comprenant
un dispositif de transport d'animaux (12) destiné à être disposé dans un espace intérieur d'un véhicule automobile avec au moins un élément de fond (18) réalisant une surface de fond (16) et avec au moins un élément latéral (22) réalisant une surface latérale (20), lesquelles définissent conjointement un espace de logement (24) du dispositif de transport d'animaux (12),
et une couverture pour animaux (14) disposée au niveau du dispositif de transport d'animaux (12) ou dans celui-ci selon l'une quelconque des revendications précédentes, dans lequel la surface d'assise de la couverture pour animaux (14) correspond à la surface de fond (16) du dispositif de transport d'animaux (12).
